# EUROPEAN PATENT SPECIFICATION

(11) **EP 1 771 294 B1**
(45) Date of publication and mention of the grant of the patent: **08.10.2008**
(21) Application number: 06743564.4
(22) Date of filing: 30.05.2006
(51) Int. Cl.: B29D 30/00, B65G 47/90

(54) **GREEN TYRE CONVEYOR**
REIFENROHLINGS-FÖRDERVORRICHTUNG
CONVOYEUR DE PNEU CRU

(30) Priority: 01.06.2005 FI 20055273
(43) Date of publication of application: 11.04.2007
(73) Proprietor: CIMCORP OY, 27400 Ulvila (FI)
(72) Inventor: MIIKKULAINEN, Kari, FI-28360 Pori (FI)
(74) Representative: Gustafsson, Aulis Valdemar
(86) International application number: PCT/FI2006/050222
(87) International publication number: WO 2006/128969

(56) References cited:
- EP-A- 1 059 246
- WO-A-00/35665
- DE-A1- 3 936 555
- US-A- 4 620 831
- US-A- 5 085 556

## Description

### Field of technology

The invention relates to a green tire conveyor intended for conveying a green tyre to a side-loading curing press according to the preamble of claim 1 and to a method for use in the conveyor.

### Prior art

Vehicle tyres are manufactured mostly from various kinds of rubber, soot and oil. Furthermore, tyres comprise various reinforcement materials and may include other materials. At first, the materials to be added to the rubber are mixed in. The mixture is also heated up. The mixture is used for rubberising the reinforcement materials such as steel belts. This creates the components of a tyre. The components are assembled into a green tyre using assembly machines. The green tyres are vulcanised - that is, cured - in curing presses. Finally, the tyre is inspected. Thus the manufacture of tyres requires various stages of work through which the tyre in preparation is taken. The tyre under preparation must be moved from one stage to another with the minimum possible resources in order to optimise the overall efficiency of the manufacturing process. For example, the green tyre can be moved directly to the curing press or to a green tyre storage facility where it will wait for final transfer to the curing press.

The publications US 6499980 and WO0035665 describe the conveyance of a green tyre to the type of curing press generally used today, including a loading manipulator. The green tyre must be placed below the loading manipulator, which will then move the green tyre inside the curing press. This type of curing press is side-loading. The publication describes a rail-mounted conveyor and an elevator system used for moving the green tyre from the manufacturing area to the curing presses. The rail is elevated from the floor level. The rail is preferably located high enough to allow the floor space to be used for other purposes as necessary. The conveyor moves on the rail to the front of the curing press. The conveyor includes a gripper that holds the green tyre during transfer. When the conveyor is in front of the curing press, the gripper releases the green tyre, which is then moved by a basket in the elevator system. The elevator system comprises a vertical rail in front of the curing press on which an elevator moves. A basket is attached to the elevator with a horizontal arm. The green tyre is lowered in the basket to the front of the curing press and moved below the loading manipulator by rotating the elevator. The problem with this system is that it requires space in front of each curing press and has many parts.

EP 1059246 describes a tire storage system with a crane. A forklift truck is used to transfer the tires. US 4620831, DE 3936555 and US 5085556 describe industrial robot systems having an arm and a gripping component to remove an article.

However, the most common way of moving a green tyre to a curing press is still to load a trolley with a green tyre and manually push it to the front of the curing press. The green tyre is taken from the trolley manually and placed below the loading manipulator.

Pushing trolleys and moving green tyres by human labour is hard and relatively slow work. Furthermore, it is not cost-efficient. The problem with the rail/elevator system described above is that it requires space in front of each curing press. This makes it difficult to replace the mould in the curing press, for example, because the elevator limits the available working area. Furthermore, the rail/elevator system consists of a relatively high number of parts.

### Short description of invention

The objective of the invention is to eliminate the problems of prior art described above. In other words, the objective is to create a conveyor system that is able to move a green tire from a pick-up point to below the loading manipulator of a desired curing press, having fewer separate parts than in the known solutions. The objective will be achieved as described in the independent claims. The dependent claims describe various embodiments of the invention. A conveyor according to the invention is able to move a green tyre from a pickup point to below the loading manipulator of the desired curing press without requiring separate equipment.

The green tyre conveyor is intended to move on a horizontal rail in the normal manner. The conveyor comprises a gripper for picking up and releasing the green tyre. Furthermore, the conveyor comprises a horizontal carrier for horizontally moving the green tyre in a direction transversal to the horizontal rail. The horizontal carrier comprises a horizontally collapsible arm with said gripper attached to its end. The conveyor also includes a vertical carrier comprising a vertical telescopic arm with said horizontal carrier attached to its end.

### List of figures

In the following, the invention is described in more detail by reference to the enclosed drawings, where
- Figure 1: illustrates an example of a tyre manufacturing environment,
- Figure 2: illustrates the example of Figure 1 from another direction,
- Figure 3: illustrates an example of using a conveyor according to the invention,
- Figure 4: illustrates an example of a conveyor according to the invention at the stage of picking up a green tyre,
- Figure 5: illustrates an example of a conveyor according to the invention while it is moving on the rail,
- Figure 6: illustrates an example of a conveyor according to the invention at the stage of releasing a green tyre,
- Figure 7: illustrates an example of a flowchart of the method according to the invention.

### Description of the invention

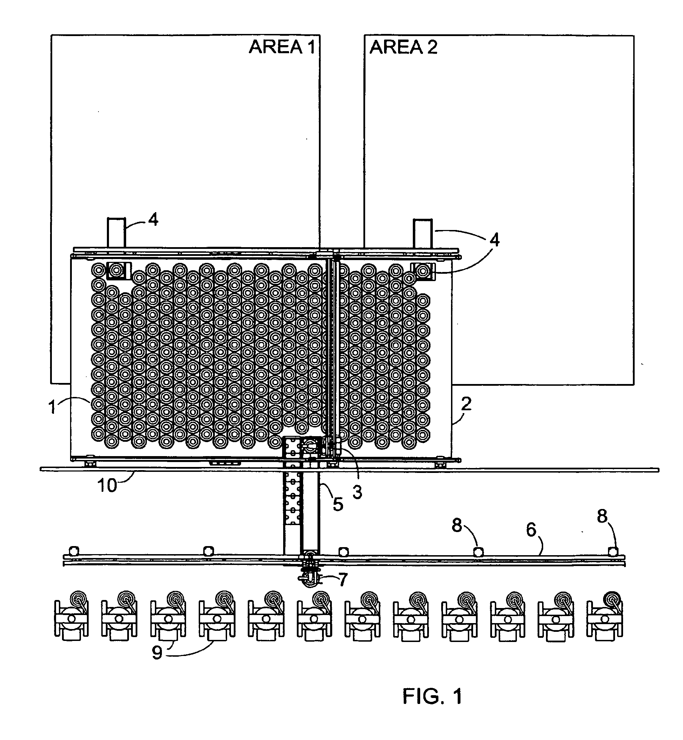

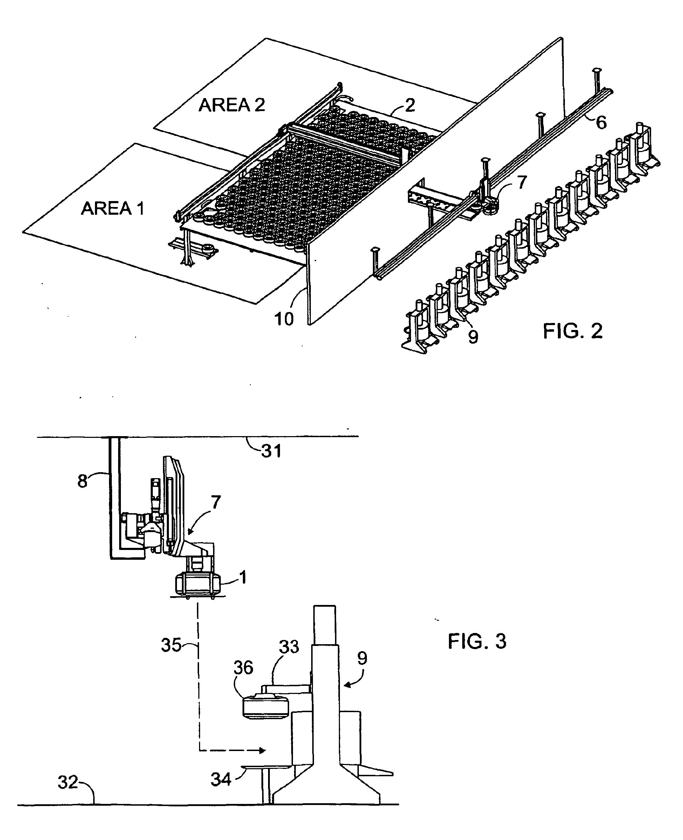

Figure 1 illustrates an example of a tyre manufacturing environment viewed from above. A green tyre 1 is manufactured in area 1 or area 2. The manufactured green tyres are moved through transfer points 4 to green tyre storage 2, which can be a platform above the floor level of the manufacturing environment (Figure 2). A store crane 3 moves the completed green tyres from the transfer points 4 to a vacant storage space. The store crane 3 also moves the stored green tyres to a pickup point 5 from where they are further conveyed to the curing presses 9.

For example, the pickup point 5 is a belt conveyor system that moves the green tyres from storage 2 to the vicinity of the transfer rail 6. The transfer rail is installed at a suitable distance from the curing presses 9 that constitute a row. Because free space is desired in front of the curing presses, it is reasonable to support the transfer rail on the ceiling structures, not the floor, using support structures 8. A conveyor 7 according to the invention is arranged to move on the transfer rail. There may be a wall 10 between the storage 2 and the transfer rail 6 to clearly separate the areas from each other.

Figure 2 illustrates the tyre manufacturing environment viewed from another direction. Figure 2 more clearly shows how the green tyre storage 2 is above the floor level and how the transfer rail 6 is supported on the ceiling structures using support structures 8. The conveyor 7 according to the invention is at the pickup point 5 from where it can pick up the green tyre 1. The conveyor is able to move to the desired curing press on the horizontal rail 6.

Once the conveyor 7 has picked up the green tyre 1 and moved on the rail 6 to the desired curing press 9, the conveyor moves 35 the green tyre below the loading manipulator 33 of the curing press. Figure 3 illustrates this situation. There is a platform 34 below the loading manipulator onto which the green tyre is released. The loading manipulator 33 moves the green tyre from the platform into the curing press. Once the green tyre is cured, it will be removed from the curing press.

As is evident from Figure 3, the conveyor 7 according to the invention is able to move the green tyre 1 vertically and horizontally below the loading manipulator. Thus the conveyor must have means for moving the green tyre vertically from the top downwards to a level below the loading manipulator of the curing press. The conveyor must also have means for moving the green tyre horizontally below the loading manipulator even if there is a previously conveyed green tyre 36 in the loading manipulator waiting for transfer into the curing press. Thus the space below the loading manipulator is a relatively limited location into which the conveyor 7 according to the invention is able to convey the green tyre. This is possible when the vertical dimensions of the arm and gripper structures are such that they allow the horizontal transfer and release of the green tyre into the desired location on the side of the curing press below its loading manipulator.

It is also evident from Figure 3 how the support structures 8 for the transfer rail 6 are attached to the ceiling structures 31 and how the rail and support structures are located in front of the curing presses 9 that are on the floor level 32. The transfer rail 6 can also be supported on the floor level 32, but this will limit the clear floor space in front of the curing press. Clear floor space will facilitate the replacement of curing press moulds, for example.

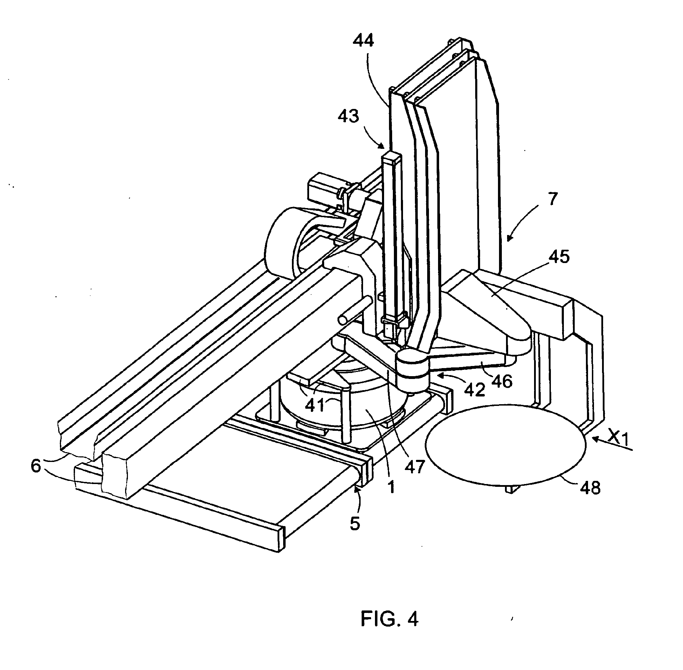

Figure 4 illustrates a more detailed example of a conveyor 7 according to the invention. The conveyor is able to move on the horizontal rail 6. The horizontal rail may actually comprise several horizontal structures as illustrated in Figure 4. In the situation of Figure 4, the conveyor is at the pickup point 5 picking up green tyres. The conveyor's horizontal carrier 42 is able to horizontally move the green tyre in a direction transversal to the horizontal rail 6. The horizontal carrier 42 in the example of Figure 4 comprises a support part 45 attached to the conveyor's vertical carrier 43, as well as a horizontally collapsible arm. The collapsible arm comprises two arms 46, 47 with joints at both ends. The first arm 46 is attached to the support part 45 through the joint at the first end, and the second arm 47 is attached through the joint at the first end to the joint at the second end of the first arm 46.

A gripper 41 is attached to the joint at the second end of the second horizontal arm 47. The arm is able to stretch out and collapse so that the gripper 41 will move horizontally in a linear fashion. The gripper is attached to the end of the horizontal carrier arm so that the gripper is below the horizontal carrier arm. When the horizontal arm stretches out towards the pickup point, the gripper is able to grip the outer surface of the green tyre's tread. The arrow X1 illustrates the horizontal arm's movement towards the pickup point. When the green tyre is in the gripper, the horizontal arm collapses, making the gripper and the tyre attached to it move horizontally.

The conveyor also includes a vertical carrier 43 comprising a vertical telescopic arm 44 with the horizontal carrier 42 attached to its end. Furthermore, the conveyor 7 may include a safety platform 48 (at the end of the vertical carrier) for ensuring that the green tyre being moved will not fall off the gripper.

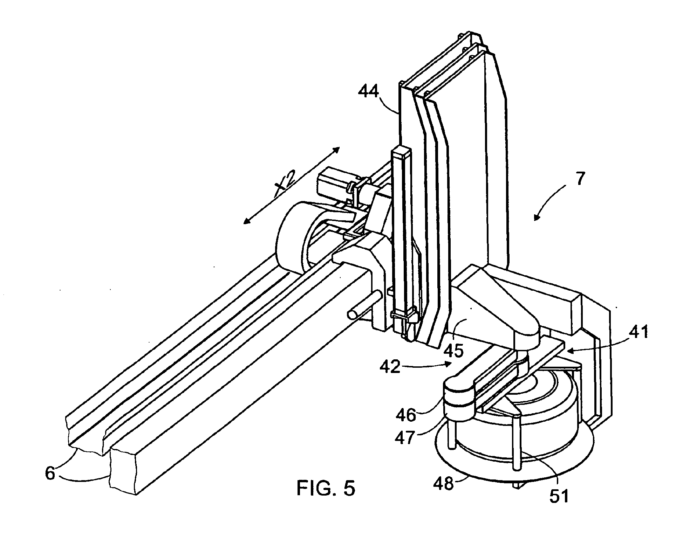

Figure 5 illustrates a situation in which the conveyor 7 is moved on the horizontal rail 6 to the desired curing press. The arrow X2 illustrates this movement. As is evident from Figure 5, the arm of the horizontal carrier 42 and the vertical telescopic arm 44 are collapsed - that is, they are not in the stretched out position. Moving the conveyor thus requires less surrounding space and is not as likely to cause dangerous situations.

The optional safety platform 48 prevents the green tyre from falling off if it slips off the gripper 41. As is evident from the figure, the gripper supports the green tyre with four projections 51 that form the gripper's gripping surfaces. The projections are on the side of the green tyre's tread and can be pressed towards the tread to provide a grip or moved away from the tread to release the green tyre from the gripper. Other parts of the gripper are above the green tyre.

The gripper's structure can also deviate from that illustrated in Figure 5. For example, the gripper can be constructed so that the projections are intended to grip the bead region of the green tyre, not the tread.

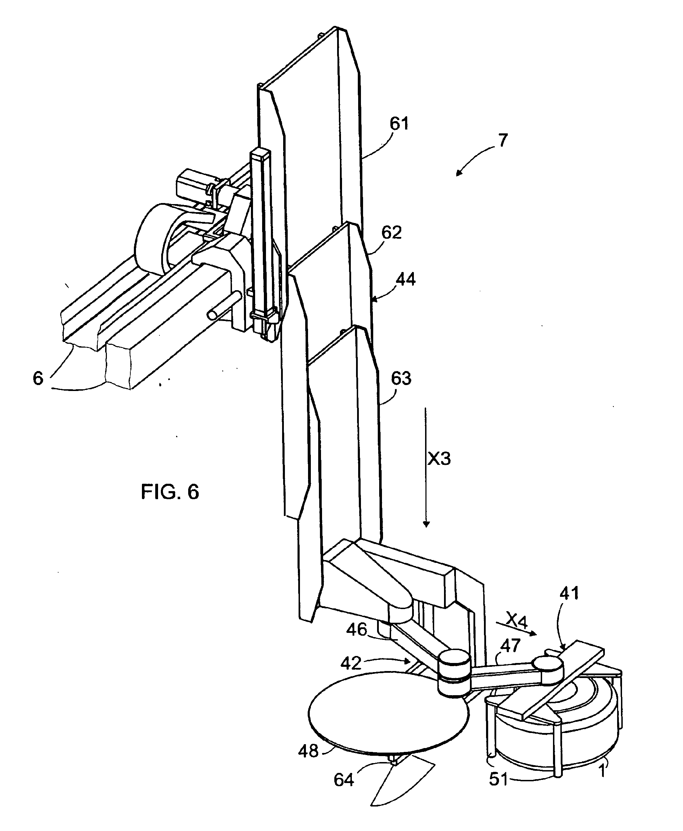

Figure 6 illustrates a situation in which the conveyor 7 is at the desired curing press. Figure 3 illustrates the same situation viewed from the side. The green tyre 1 and gripper 41 are lowered using the vertical carrier telescopic arm 44. Figure 6 illustrates the different parts 61, 62, 63 of the telescopic arm when the arm is stretched out downwards. The arrow X3 illustrates the downward stretching-out motion of the telescopic arm.

When the telescopic arm 44 stretches out downwards, the arm 42 of the horizontal carrier is collapsed - that is, in the state illustrated in Figure 5. Once the telescopic arm is stretched out sufficiently low to allow the green tyre 1 to be moved horizontally below the loading manipulator of the curing press, the arm of the horizontal carrier 42 stretches out towards the curing press. The arrow X4 illustrates this movement. Once the green tyre is below the loading manipulator, the gripper 41 releases the green tyre.

It is also possible to add a scanner 64 to the conveyor 7 either on the gripper 41 or at the end of the vertical carrier (below the safety platform 48, for example) for monitoring the space below the gripper that is to be lowered. This ensures that the space in front is clear when the gripper is lowered. If there is an obstacle for vertical movement, the downward movement of the telescopic arm will be suspended.

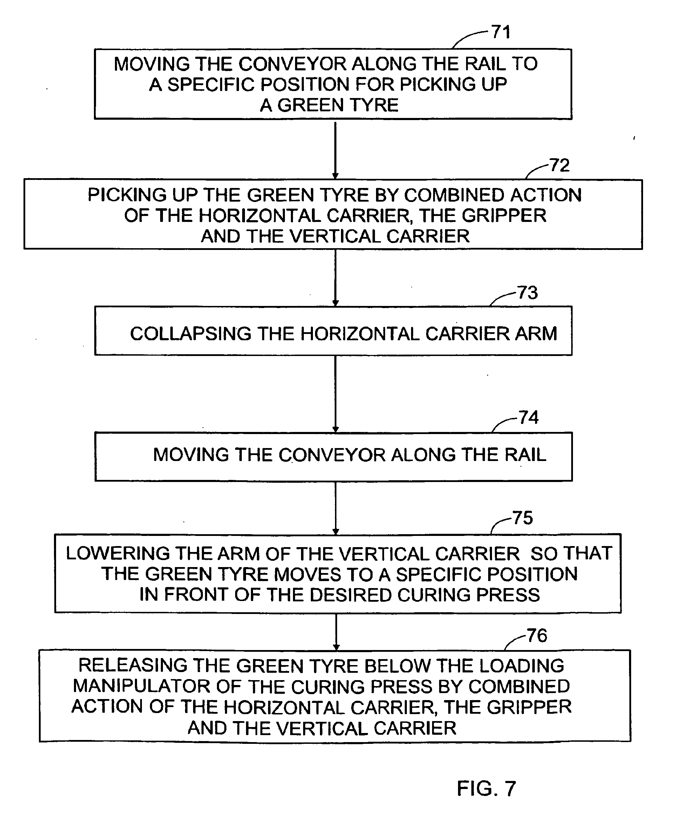

The invention also relates to a method used in a conveyor according to the invention. Figure 7 illustrates an example of a flowchart of the different stages of the method. At first, the conveyor 7 is moved 71 along the rail to a specific position for picking up a green tyre. This stage is required to move the conveyor to the pickup point 5 if the conveyor is at a different position on the horizontal rail 6. The green tyre is picked up 72 by combined action of the horizontal carrier, the gripper and the vertical carrier. After this, the horizontal carrier arm is collapsed 73. The conveyor is moved 74 along the rail. Movement along the rail is preferably carried out with the carrier arms collapsed. Once the conveyor is at the desired position - that is, at the desired curing press - the vertical carrier arm is lowered 75 so that the green tyre moves to a specific position in front of the desired curing press. From this position, the green tyre can be horizontally moved to the curing press. In other words, the green tyre is released 76 below the loading manipulator of the curing press by combined action of the horizontal carrier, the gripper and the vertical carrier.

The stage of picking up the green tyre comprises the sub-stages of stretching out the horizontal carrier, lowering the horizontal carrier by using the vertical carrier, gripping the conveyed object by using the gripper and raising the horizontal carrier by using the vertical carrier. In other words, the horizontal carrier is used to move the gripper to the top of the green tyre so that the gripping projections 51 are positioned on the sides of the green tyre. The gripper is slightly lowered towards the green tyre by using the vertical carrier to enable the gripper's gripping surfaces to get a better hold of the green tyre. Once the gripper has gripped the green tyre, it is slightly raised so that the gripper and the tyre are not in contact with the pickup point platform, enabling the gripper and the green tyre to be moved horizontally without friction.

Correspondingly, the stage of releasing the green tyre comprises the sub-stages of stretching out the horizontal carrier, lowering the horizontal carrier by using the vertical carrier, releasing the conveyed object from the gripper, raising the horizontal carrier by using the vertical carrier and collapsing the horizontal carrier arm. The slight vertical movements are intended to prevent the green tyre from rubbing against the curing press platform 34.

The method optionally allows monitoring the space below the horizontal carrier when the horizontal carrier is lowered using the vertical carrier. A prerequisite for this is that the conveyor comprises a scanner 64.

Because the space below the loading manipulator 33 is a relatively limited location, the vertical dimensions of the horizontal carrier arm and the gripper attached to its end must be small enough to allow the gripper to be moved horizontally below the loading manipulator. The gripper is attached to the end of the horizontal carrier arm so that the gripper is below the horizontal carrier arm and/or is an extension of the arm. When the vertical dimension - in other words, the height - of the horizontal carrier's 42 arm and gripper is small enough, the gripper and the attached green tyre can be moved below the loading manipulator even if there already is a green tyre in the loading manipulator.

The horizontal carrier 42 can also be constructed in a manner other than that illustrated in the figures. For example, the support part 45 for the horizontal carrier can be a component of the vertical carrier 43 and not the horizontal carrier. The horizontal carrier 42 may also comprise a horizontal telescopic arm with its first end attached to the vertical carrier 43 and its second end attached to the gripper 41. In this case, the structure of the horizontal carrier arm can be similar to that of the vertical carrier arm. The arm structure can also be such that the horizontal movement of the gripper is curvilinear and not linear, for example. However, linear movement is a good alternative as it will not require space in the direction of the horizontal rail.

The conveyor according to the invention is thus an integral conveyor that is able to move a green tyre from a pickup point to below the loading manipulator of a curing press. Separate conveyance arrangements are not required in front of the curing press, which results in cost savings. The number of objects requiring maintenance is also reduced as a single conveyor is able to transfer green tyres to several curing presses. Furthermore, the arrangement leaves plenty of free space for maintenance in front of the curing presses.

Another favourable feature is that the horizontal carrier can stretch out to both sides of the horizontal rail. This provides more freedom for the arrangements of the tyre manufacturing environment.

It is evident from the examples presented above that an embodiment of the invention can be created using a variety of different solutions. It is evident that the invention is not limited to the examples mentioned in this text but can be implemented in many other different embodiments.

Therefore any embodiment can be implemented within the scope of the appended claims.

## Claims

1. A green tyre conveyor (7) intended for conveying a green tyre (1) to a side-loading curing press and moving on a horizontal rail (6), said conveyor comprising a gripper (41) for picking up and releasing the green tyre, **characterised in that** the conveyor also comprises a horizontal carrier (42) for moving the green tyre (1) horizontally in a direction transversal to the horizontal rail (6), said horizontal carrier (42) comprising a horizontally collapsible arm with said gripper (41) attached to its end,
the vertical dimensions of the arm and gripper structures being such that they allow the horizontal transfer and release of the green tyre into the desired location on the side of the curing press below its loading manipulator, and
a vertical carrier (43) comprising a vertical telescopic arm (44) with the horizontal carrier (42) attached to its end.

2. A conveyor according to Claim 1, **characterised in that** the horizontal carrier (42) comprises a support part (45) that is attached to the vertical carrier (43) and two arms (46, 47) with joints at both ends, the first arm (46) being attached to the support part (45) through the joint at the first end and the second arm (47) being attached through the joint at the first end to the joint at the second end of the first arm, the gripper (41) being attached to the joint at the second end of the second arm (47) within the horizontal carrier (42), said arm (47) being able to stretch out and collapse so that the gripper (41) can be moved horizontally in a linear fashion.

3. A conveyor according to Claim 1, **characterised in that** the vertical carrier (43) comprises a support part (45), and
the horizontal carrier (42) comprises two arms (46, 47) with joints at both ends, the first arm (46) being attached to the support part (45) through the joint at the first end and the second arm (47) being attached through the joint at the first end to the joint at the second end of the first arm (46),
the gripper (41) being attached to the joint at the second end of the second arm within the horizontal carrier (42), said arm (47) being able to stretch out and collapse so that the gripper (41) can be moved horizontally in a linear fashion.

4. A conveyor according to Claim 1, **characterised in that** the horizontal carrier (42) comprises a horizontal telescopic arm with its first end attached to the vertical carrier (43) and its second end attached to the gripper (41).

5. A conveyor according to Claim 1, 2, 3 or 4, **characterised in that** the gripper (41) is attached to the end of the horizontal carrier arm so that the gripper (41) is below the horizontal carrier arm and/or is an extension of the arm.

6. A conveyor according to Claim 1, 2, 3, 4 or 5, **characterised in that** the end of the vertical carrier (43) comprises a safety platform (48) for ensuring that the green tyre (1) being moved will not fall off the gripper (41).

7. A conveyor according to Claim 5 or 6, **characterised in that** the gripper (41) or the end of the vertical carrier (43) is fitted with a scanner (64) for monitoring the space below the gripper (41) that is to be lowered.

8. A conveyor according to any of the Claims from 2 to 7, **characterised in that** the gripper (41) comprises gripping surfaces (51) that grip the outer surface of the tread of the green tyre being moved.

9. A conveyor according to any of the Claims from 2 to 7, **characterised in that** the gripper (41) comprises gripping surfaces (51) that grip the bead region of the green tyre being moved.

10. A method for use in a conveyor according to Claim 1, **characterised in that** the method comprises the following stages:
- moving the conveyor (7) along the rail (6) to a specific position for picking up a green tyre (71),
- picking up the green tyre (72) by combined action of the horizontal carrier (42), the gripper (41) and the vertical carrier (43),
- collapsing the horizontal carrier arm (73),
- moving the conveyor (7) along the rail (6),
- lowering the vertical carrier arm (74) so that the green tyre moves to a specific position in front of the desired curing press (75),
- releasing the green tyre below the loading manipulator of the curing press by combined action of the horizontal carrier (42), gripper (41) and the vertical carrier (43), (76).

11. A method according to Claim 10, **characterised in that** the stage of picking up the green tyre comprises the following sub-stages:
- stretching out the horizontal carrier (42),
- lowering the horizontal carrier (42) using the vertical carrier (43),
- gripping the conveyed object using the gripper (41), and
- raising the horizontal carrier (42) using the vertical carrier (43).

12. A method according to Claims 10 and 11, **characterised in that** the stage of releasing the green tyre comprises the following sub-stages:
- stretching out the horizontal carrier (42);
- lowering the horizontal carrier (42) using the vertical carrier (43),
- releasing the conveyed object from the gripper (41),
- raising the horizontal carrier (42) using the vertical carrier (43); and
- collapsing the horizontal carrier arm.

13. A method according to any of the Claims from 10 to 12, **characterised in that** the horizontal and vertical carrier arms are collapsed when the conveyor (7) is moved along the rail (6).

14. A method according to any of the Claims from 10 to 13, **characterised in that** the space below the horizontal carrier (42) is monitored when the horizontal carrier (42) is lowered using the vertical carrier (43).

## Patentansprüche

1. Reifenrohlings-Fördervorrichtung (7) zum Befördern eines Reifenrohlings (1) an eine seitwärts zu beaufschlagende Vulkanisierpresse, und zum Bewegen auf einer horizontalen Schiene (6), wobei die Fördervorrichtung einen Greifer (41) zum Aufnehmen und Freigeben des Reifenrohlings aufweist,
**dadurch gekennzeichnet, dass** die Fördervorrichtung ebenso einen horizontalen Träger (42) zum horizontalen Bewegen des Reifenrohlings (1) in einer Richtung quer zur Horizontalschiene (6) aufweist, wobei der horizontale Träger (42) einen horizontal einziehbaren Arm aufweist, an dessen Ende der Greifer (41) befestigt ist,
dass die vertikalen Abmessungen der Arm- und Greiferstrukturen so gewählt sind, dass sie den horizontalen Übertrag und die Freigabe des Reifenrohlings an eine gewünschte Stelle auf der Seite der Vulkanisierpresse unterhalb ihres Lademanipulators ermöglicht,
und dass ein vertikaler Träger (43) einen vertikalen Teleskoparm (44) aufweist, an dessen Ende der horizontale Träger (42) befestigt ist.

2. Fördervorrichtung nach Anspruch 1,
**dadurch gekennzeichnet, dass** der horizontale Träger (42) ein Tragteil (45) aufweist, das an dem vertikalen Träger (43) befestigt ist, sowie zwei Arme (46,47) mit Verbindungsstellen an beiden Enden, wobei der erste Arm (46) über die Verbindungsstelle an dem ersten Ende an dem Tragteil (45) befestigt ist, und der zweite Arm (47) über die Verbindungsstelle am ersten Ende mit der Verbindungsstelle an dem zweiten Ende des ersten Armes befestigt ist,
und dass der Greifer (41) an der Verbindungsstelle an dem zweiten Ende des zweiten Arms (47) in dem horizontalen Träger (42) befestigt ist, wobei der Arm (47) ausgestreckt und eingefahren werden kann, so dass der Greifer (41) in linearer Weise horizontal bewegt werden kann.

3. Fördervorrichtung nach Anspruch 1, **dadurch gekennzeichnet, dass** der vertikale Träger (43) ein Tragteil (45) aufweist, und
der horizontale Träger (42) zwei Arme (46, 47) mit Verbindungsstellen an beiden Enden aufweist, wobei der erste Arm (46) über die Verbindungsstelle an dem ersten Ende an dem Tragteil (45) befestigt ist, und der zweite Arm (47) über die Verbindungsstelle an dem ersten Ende mit der Verbindungsstelle an dem zweiten Ende des ersten Arms (46) befestigt ist,
und dass der Greifer (41) an der Verbindungsstelle am dem zweiten Ende des zweiten Arms (47) in dem horizontalen Träger (42) befestigt ist, wobei der Arm (47) ausgefahren und eingezogen werden kann, so dass der Greifer (41) in linearer Weise horizontal bewegt werden kann.

4. Fördervorrichtung nach Anspruch 1,
**dadurch gekennzeichnet, dass** der horizontale Träger (42) einen horizontalen Teleskoparm aufweist, dessen erstes Ende an dem vertikalen Träger (43) und dessen zweites Ende an dem Greifer (41) befestigt ist.

5. Fördervorrichtung nach Anspruch 1, 2, 3 oder 4,
**dadurch gekennzeichnet, dass** der Greifer (41) an dem Ende des horizontalen Trägerarmes befestigt ist, so dass der Greifer (41) unterhalb des horizontalen Trägerarms und/oder eine Verlängerung des Arms ist.

6. Fördervorrichtung nach Anspruch 1, 2, 3, 4 oder 5
**dadurch gekennzeichnet, dass** das Ende des vertikalen Trägers (43) eine Sicherheitsplattform (48) aufweist, um sicherzustellen, dass der bewegte Reifenrohling (1) nicht von dem Greifer (41) herabfällt.

7. Fördervorrichtung nach Anspruch 5 oder 6,
**dadurch gekennzeichnet, dass** der Greifer (41) oder das Ende des vertikalen Trägers (43) mit einer Scann-Einrichtung (46) versehen ist, um den Raum unterhalb des abzusenkenden Greifers (41) zu überwachen.

8. Fördervorrichtung nach einem der Ansprüche 2 bis 7,
**dadurch gekennzeichnet, dass** der Greifer (41) Greifflächen (51) aufweist, die die Außenfläche des Profils des zu bewegenden Reifenrohlings ergreifen.

9. Fördervorrichtung nach einem der Ansprüche 2 bis 7,
**dadurch gekennzeichnet, dass** der Greifer (41) Greifflächen (51) aufweist, die die Wulstregion des zu bewegenden Reifenrohlings ergreifen.

10. Verfahren zur Anwendung in einer Fördervorrichtung gemäß Anspruch 1,
**dadurch gekennzeichnet, dass** das Verfahren die folgenden Schritte aufweist:
- Bewegen der Fördervorrichtung (7) entlang der Schiene (6) an eine spezielle Position zum Aufnehmen eines Reifenrohlings, (71)
- Aufnehmen des Reifenrohlings durch eine kombinierte Aktion des Horizontalträgers (42), des Greifers (41) und des vertikalen Trägers (43), (72)
- Einziehen des horizontalen Trägerarms, (73)
- Bewegen der Fördervorrichtung (7) entlang der Schiene (6), (74)
- Absenken des vertikalen Trägerarms, so dass der Reifenrohling an eine bestimmte Position vor der gewünschten Vulkanisierpresse bewegt wird, (75)
- Freigeben des Reifenrohlings unterhalb des Lademanipulators der Vulkanisierpresse durch eine kombinierte Aktion des horizontalen Trägers (42), des Greifers (41) und des vertikalen Trägers (43), (76).

11. Verfahren nach Anspruch 10,
**dadurch gekennzeichnet, dass** der Schritt des Aufnehmens des Reifenrohlings die folgenden Unterschritte aufweist:
- Ausziehen des horizontalen Trägers (42),
- Absenken des horizontalen Trägers (42) unter Verwendung des vertikalen Trägers (43),
- Ergreifen des beförderten Objektes mit Hilfe des Greifers (41), und
- Anheben des horizontalen Trägers (42) unter Verwendung des vertikalen Trägers (43).

12. Verfahren nach Anspruch 10 oder 11,
**dadurch gekennzeichnet, dass** der Schritt des Freigebens des Reifenrohlings die folgenden Unterschritte umfasst:
- Ausziehen des horizontalen Trägers (42),
- Absenken des horizontalen Trägers (42) unter Verwendung des vertikalen Trägers (43),
- Freigeben des beförderten Objektes von dem Greifer (41),
- Anheben des horizontalen Trägers (42) unter Verwendung des vertikalen Trägers (43), und
- Einziehen des horizontalen Trägerarms.

13. Verfahren nach einem der Ansprüche 10 bis 12,
**dadurch gekennzeichnet, dass** die horizontalen und vertikalen Trägerarme eingezogen werden, wenn die Fördervorrichtung (7) entlang der Schiene (6) bewegt wird.

14. Verfahren nach einem der Ansprüche 10 bis 13,
**dadurch gekennzeichnet, dass** der Raum unterhalb des horizontalen Trägers (42) überwacht wird, wenn der horizontale Träger (42) unter Verwendung des vertikalen Trägers (43) abgesenkt wird.

## Revendications

1. Convoyeur de pneu cru (7) conçu pour acheminer un pneu cru (1) vers une presse à vulcaniser à chargement latéral et se déplaçant sur un rail horizontal (6), ledit convoyeur comprenant un dispositif de préhension (41) pour saisir et libérer le pneu cru, **caractérisé en ce que** le convoyeur comprend également un élément porteur horizontal (42) pour déplacer le pneu cru (1) horizontalement dans une direction transversale au rail horizontal (6), ledit élément porteur horizontal (42) comprenant un bras s'affaissant horizontalement à l'extrémité duquel est fixé ledit dispositif de préhension (41),
les dimensions verticales du bras et les structures de préhension étant telles qu'elles permettent le transfert horizontal et la libération du pneu cru à l'emplacement souhaité sur le côté de la presse à vulcaniser en dessous de son manipulateur de chargement, et
un élément porteur vertical (43) comprenant un bras télescopique vertical (44) avec l'élément porteur horizontal (42) fixé à son extrémité.

2. Convoyeur selon la revendication 1, **caractérisé en ce que** l'élément porteur horizontal (42) comprend une partie de support (45) qui est fixée à l'élément porteur vertical (43) et deux bras (46, 47) avec des articulations aux deux extrémités, le premier bras (46) étant fixé à la partie de support (45) par le biais de l'articulation au niveau de la première extrémité et le second bras (47) étant fixé par le biais de l'articulation au niveau de la première extrémité à l'articulation au niveau de la seconde extrémité du premier bras,
le dispositif de préhension (41) étant fixé à l'articulation au niveau de la seconde extrémité du second bras (47) à l'intérieur de l'élément porteur horizontal (42) ; ledit bras (47) étant apte à s'étirer et se plier de sorte que le dispositif de préhension (41) peut être déplacé horizontalement selon un mode linéaire.

3. Convoyeur selon la revendication 1, **caractérisé en ce que** l'élément porteur vertical (43) comprend une partie de support (45), et
l'élément porteur horizontal (42) comprend deux bras (46, 47) avec des articulations aux deux extrémités, le premier bras (46) étant fixé à la partie de support (45) par le biais de l'articulation au niveau de la première extrémité et le second bras (47) étant fixé par le biais de l'articulation au niveau de la première extrémité à l'articulation au niveau de la seconde extrémité du premier bras (46),
le dispositif de préhension (41) étant fixé à l'articulation au niveau de la seconde extrémité du second bras (47) à l'intérieur de l'élément porteur horizontal (42), ledit bras (47) étant apte à s'étirer et se plier de sorte que le dispositif de préhension (41) peut être déplacé horizontalement selon un mode linéaire.

4. Convoyeur selon la revendication 1, **caractérisé en ce que** l'élément porteur horizontal (42) comprend un bras télescopique horizontal avec sa première extrémité fixée à l'élément porteur vertical (43) et sa seconde extrémité fixée au dispositif de préhension (41).

5. Convoyeur selon la revendication 1, 2, 3 ou 4, **caractérisé en ce que** le dispositif de préhension (41) est fixé à l'extrémité du bras porteur horizontal de sorte que le dispositif de préhension (41) se trouve en dessous du bras porteur horizontal et/ou est un prolongement du bras.

6. Convoyeur selon la revendication 1, 2, 3, 4 ou 5, **caractérisé en ce que** l'extrémité de l'élément porteur vertical (43) comprend une plate-forme de sécurité (48) pour s'assurer que le pneu cru (1) en cours de déplacement ne tombe pas du dispositif de préhension (41).

7. Convoyeur selon la revendication 5 ou 6, **caractérisé en ce que** le dispositif de préhension (41) ou l'extrémité de l'élément porteur vertical (43) est doté d'un scanneur (64) pour surveiller l'espace en dessous du dispositif de préhension (41) qui doit être abaissé.

8. Convoyeur selon l'une quelconque des revendications 2 à 7, **caractérisé en ce que** le dispositif de préhension (41) comprend des surfaces de préhension (51) qui saisissent la surface externe de la bande de roulement du pneu cru en cours de déplacement.

9. Convoyeur selon l'une quelconque des revendications 2 à 7, **caractérisé en ce que** le dispositif de préhension (41) comprend des surfaces de préhension (51) qui saisissent la région de talon du pneu cru en cours de déplacement.

10. Procédé destiné à être utilisé dans un convoyeur selon la revendication 1, **caractérisé en ce que** le procédé comprend les étapes consistant à :
- déplacer le convoyeur (7) le long du rail (6) vers une position spécifique pour saisir un pneu cru (71),
- saisir le pneu cru (72) par l'action combinée de l'élément porteur horizontal (42) ; du dispositif de préhension (41) et de l'élément porteur vertical (43) ;
- plier le bras porteur horizontal (73),
- déplacer le convoyeur (7) le long du rail (6),
- abaisser le bras porteur vertical (74) de sorte que le pneu cru se déplace vers une position spécifique face à la presse à vulcaniser souhaitée (75),
- libérer le pneu cru en dessous du manipulateur de chargement de la presse à vulcaniser par l'action combinée de l'élément porteur horizontal (42), du dispositif de préhension (41) et de l'élément porteur vertical (43), (76).

11. Procédé selon la revendication 10, **caractérisé en ce que** l'étape de préhension du pneu cru comprend les sous-étapes consistant à _{:}
- étirer l'élément porteur horizontal (42) ;
- abaisser l'élément porteur horizontal (42) en utilisant l'élément porteur vertical (43) ;
- saisir l'objet acheminé en utilisant le dispositif de préhension (41) ; et
- soulever l'élément porteur horizontal (42) en utilisant l'élément porteur vertical (43).

12. Procédé selon les revendications 10 et 11,
**caractérisé en ce que** l'étape de libération du pneu cru comprend les sous étapes consistant à :
- étirer l'élément porteur horizontal (42),
- abaisser l'élément porteur horizontal (42) en utilisant l'élément porteur vertical (43),
- libérer l'objet acheminé du dispositif de préhension (41),
- soulever l'élément porteur horizontal (42) en utilisant l'élément porteur vertical (43) ; et
- replier le bras porteur horizontal.

13. Procédé selon l'une quelconque des revendications 10 à 12, **caractérisé en ce que** les bras porteurs horizontal et vertical sont repliés lorsque le convoyeur (7) est déplacé le long du rail (6).

14. Procédé selon l'une quelconque des revendications 10 à 13, **caractérisé en ce que** l'espace en dessous de l'élément porteur horizontal (42) est surveillé lorsque l'élément porteur horizontal (42) est abaissé en utilisant l'élément porteur vertical (43).
